# FASCICULE DE BREVET EUROPEEN

(11) **EP 0 401 116 B1**
(45) Date de publication et mention de la délivrance du brevet: **26.01.1994**
(21) Numéro de dépôt: 90401451.1
(22) Date de dépôt: 31.05.1990
(51) Int. Cl.: C08B 37/00, A23L 1/05

(54) **Procédé de séchage des carraghénanes**
Trocknungsverfahren für Karraghenane
Process for drying of carrageens

(30) Priorité: 01.06.1989 FR 8907256
(43) Date de publication de la demande: 05.12.1990
(73) Titulaire: ELF SANOFI, 75008 Paris (FR)
(72) Inventeur: LeFrancois, Jacky, F-50500 Carentan (FR); Lhonneur,Jean-Pierre, F-50500 Carentan (FR)
(74) Mandataire: Gillard, Marie-Louise

(56) Documents cités:
- EP-A- 0 122 289
- FR-A- 2 369 329
- FR-A- 2 376 869
- GB-A- 2 061 728
- DERWENT FILE SUPPLIER WPI/L, no. AN-87-210585, 1987, Derwent Publications ltd, Londres, GB; & JP-A-62 138 171
- DERWENT FILE SUPPLIER WPI/L, no. AN-79-764 55B, 1979, Derwent Publications Ltd, Londres, GB; & JP-A-54 117 045
- DERWENT FILE SUPPLIER WPI/L, no. AN-87-181872, 1987, Derwent Publications Ltd, Londres, GB; & JP-A-62 111 917
- Römpps Chemie Lexikon, 8ième éd., Franckh'sche Verlagshandlung, Stuttgart 1979, pages 610 et 611

## Description

La présente invention concerne un procédé de séchage des carraghénanes, polysaccharides sulfatés très utilisés dans l'industrie alimentaire pour épaissir, gélifier ou stabiliser les suspensions, tout particulièrement dans des milieux à base de lait, ainsi que les carraghénanes à dispersibilité améliorée obtenus.

Le document FR 2 369 329 concerne un procédé d'amélioration des propriétés de la gélatine ainsi que celles des gelées préparées à partir de celle-ci. Ce procédé permet d'obtenir une gélatine pouvant se dissoudre facilement et rapidement dans l'eau froide, en traitant une gélatine contenant de l'eau, par chauffage, par induction par les micro-ondes.

Les carraghénanes sont extraits des algues rouges, et plus particulièrement des Chondrus crispus, Euchema cottonii, Euchema spinosum ou Irideae species ; selon l'origine, on obtient différents types de carraghénane, dénommés lambda, iota ou kappa carraghénanes, de structure et de propriétés légèrement différentes.

Industriellement, on obtient ces produits en faisant macérer les algues broyées dans de l'eau chaude alcalinisée après quelques heures, les insolubles sont séparés par filtration à chaud et le carraghénane est coagulé par addition d'un solvant alcoolique au filtrat, en général par addition d'isopropanol. Les fibres formées sont isolées par filtration, essorées, puis relavées avec de l'isopropanol avant un nouvel essorage. La masse blanche fibreuse obtenue contient environ 55% de polysaccharide, 15% d'isopropanol et 30% d'eau. Elle est ensuite séchée sous vide partiel, à une température comprise entre 40°C et 60°C environ, en général jusqu'à un extrait sec de 10%. Les fibres sont alors broyées, pour donner une poudre de faible densité, assez difficile à manipuler et à ensacher. En outre, et c'est un inconvénient majeur, la poudre est difficile à disperser dans les liquides, dont le lait, et en l'absence d'agitation forte et d'addition lente, il se forme des grumeaux et des amas dans la préparation.

On améliore la dispersibilité du polysaccharide en compactant les fibres humides, à 20% d'extrait sec, dans un compacteur à cylindres sous une pression supérieure à 10⁸ Pa ; après broyage, on isole une poudre, constituée encore de filaments brisés, mais dont la densité est supérieure à celle de la poudre obtenue directement, par exemple dont la densité est 0,7 à 0,8 au lieu de 0,3 à 0,4 et surtout dont la dispersibilité dans l'eau ou le lait est satisfaisante ; néanmoins ce procédé présente un certain nombre d'inconvénients dont le coût de l'investissement en matériel, et une certaine difficulté de mise en oeuvre, notamment parce que l'alimentation en continu du compacteur avec les fibres est complexe.

On peut aussi envisager pour améliorer la dispersibilité, de mélanger avec la poudre, une faible proportion de surfactif alimentaire, tel que la lécithine, les esters de sorbitan. Mais l'utilisation de ces produits n'est pas autorisée dans tous les pays et surtout ils ne sont pas transparents en solution acqueuse.

On a aussi préconisé d'utiliser les carraghénanes en mélange avec des charges, par exemple des sucres ou des sels mais ceci ne peut convenir pour certaines applications.

On a maintenant trouvé qu'en séchant, dans des conditions particulières, les fibres humides, on obtenait une poudre assez dense et facile à disperser dans les milieux aqueux ou lactés, qui présente, par ailleurs, sensiblement les mêmes propriétés physico-chimiques que la poudre obtenue par un séchage classique.

Le procédé, selon l'invention, consiste à sécher les fibres imprégnées d'eau, dans une enceinte à micro-ondes, à pression ordinaire, au lieu d'effectuer un séchage dans un séchoir sous vide à une température comprise entre 40°C et 60°C et une pression comprise entre 10⁵ et 10⁶ Pa environ.

Les fibres imprégnées d'eau, avant d'être soumises à l'action des micro-ondes, comporteront de 20% à 100% de leur poids en eau.

Ces fibres peuvent être celles isolées à la fin du procédé d'extraction après lavage et essorage ; outre l'eau, il y a alors une certaine quantité d'isopropanol et on préfère, notamment à cause des risques d'inflammation et de la toxicité de l'alcool, faire un préséchage de la masse dans un four classique éventuellement sous vide jusqu'à un extrait sec de 70% environ.

On peut aussi appliquer ce procédé aux fibres séchées de façon classique après les avoir mélangées avec un peu d'eau dans un malaxeur ; la quantité d'eau à utiliser peut varier dans de larges proportions ; il suffit, en général, de réempater avec le même poids d'eau.

Pour effectuer le séchage, on peut utiliser n'importe quel four à micro-ondes comme ceux maintenant commercialisés pour le séchage des produits industriels par la société FAMO - Villefranche S/Saone (FR) de la série AIMT AM, ou la société APV Magnetronics (GB), ou IMI - Epone (FR). En général, en France ces appareils émettent à la fréquence de 915 ou 2450 MHz, mais cette fréquence n'est pas critique et l'on peut utiliser des émetteurs entre 100 et 10000 MHz, lorsque leur emploi est autorisé dans le pays où l'opération a lieu.

On sait qu'en moyenne 1 kg d'eau est évaporé par kw fourni par heure, et la durée du traitement dépend essentiellement de la quantité d'énergie reçue par unité de volume, de la quantité d'humidité présente dans la masse au départ et de l'épaisseur de celle-ci, mais il importe que la température à l'intérieur de la masse de carraghénane ne dépasse pas 100°C et mieux 95°C, pour éviter toute décomposition du polysaccharide.

On préfère opérer avec des dispositifs permettant un séchage en continu, les carraghénanes étant introduits dans la zone irradiée par une bande transporteuse en matière inerte aux micro-ondes.

L'aspect des fibres n'est pas modifié au cours de cette opération de séchage, contrairement à ce qu'on observe avec d'autres macromolécules et notamment pour les protéines comme le blanc d'oeuf, dont le réseau macroscopique est expansé lorsqu'elles sont soumises aux micro-ondes en présence d'eau. Au contraire, la densité de la poudre obtenue après broyage des fibres ainsi séchées est supérieure à celle de la poudre obtenue après un séchage classique.

Les carraghénanes Kappa et leurs mélanges gélifiants avec les lambda et iota, séchés par le procédé classique jusqu'à 95% d'extrait sec sont floconneux et les fibres difficiles à broyer donnent toujours une poudre cotonneuse de densité 0,3-0,4 ; par contre, avec le séchage aux micro-ondes, les fibres à 93-95% d'extrait sec sont broyables et donnent une poudre de densité supérieure, voisine de 0,5, fluide et non cotonneuse.

Les carraghénanes lambda et iota sont séchés généralement, par le procédé classique, jusqu'à un extrait sec de 90 à 92% ; ils sont alors broyables et donnent une poudre fluide ; mais avec le séchage aux micro-ondes, il suffit d'avoir un extrait sec de 83 à 85% qui sera suffisamment dense pour donner par broyage une poudre non floconneuse ayant un extrait sec de 90-95%.

En outre, la dispersibilité des poudres dans les milieux aqueux ou lactés est meilleure : il se forme nettement moins de grumeaux sous faible agitation ou en l'absence d'élévation de température.

Un autre avantage du procédé selon l'invention est l'amélioration de la qualité bactériologique de la poudre obtenue : le nombre de germes par gramme est inférieur à celui du séchage classique.

La poudre, ainsi séchée a les mêmes propriétés rhéologiques qu'une poudre séchée dans les conditions classiques et son goût n'est pas modifié ; aussi elle peut être utilisée dans toutes les applications classiques des carraghénanes, telles que lait cacaoté, crèmes glacées, flans et produits analogues.

Dans ce qui suit, on décrit un exemple du procédé selon l'invention.

### Exemple :

On utilise un four à micro-ondes émettant à 2450 MHz. Le carraghénane, extrait d'Euchema Cottonnii pressé contenant en poids 35% d'eau et 15% d'isopropanol est préséché jusqu'à 30% d'eau et 5% d'isopropanol puis il est introduit dans le four sur une bande transporteuse où il a été déposé sur une épaisseur uniforme, comprise entre 5 et 10 cm ; la vitesse de la bande dépend de la longueur du four, de la quantité d'eau dans le produit à l'entrée et de l'extrait sec fixé pour le produit sortant. En général, avec une vitesse de bande de 0,1 à 5 m/min., le temps de séjour moyen est de 5 à 15 minutes, pour un produit contenant environ 30% d'eau à l'entrée dans un four équipé de 48 générateurs de 800 watts ; les fibres de carraghénane ainsi obtenues, à 93-94% d'extrait sec sont broyées comme le sont les fibres obtenues dans un séchoir sous vide dans un broyeur à marteau puis sont tamisées. La poudre obtenue est homogène, fluide, ne s'agglomère pas contrairement à celle issue du séchage classique.

## Revendications

1. Procédé de séchage des carraghénanes extraits des algues rouges par traitement alcalin en milieu aqueux,caractérisé en ce que ledit séchage est réalisé en soumettant les fibres humides à l'action de micro-ondes de 100 à 10000 MHz, de telle sorte que la température de la masse ne dépasse pas 100°C à pression ordinaire.

2. Procédé selon la revendication 1, caractérisé en ce que les fibres sont préalablement préséchées jusqu'à un extrait sec de 65 % à 70 %.

3. Procédé selon l'une des revendications 1 ou 2, caractérisé en ce que la fréquence des micro-ondes est de 2450 MHz.

4. Procédé selon l'une quelconque des revendications 1 à 3, caractérisé en ce qu'il est effectué en continu, les carraghénanes étant introduits dans le four à micro-ondes disposés sur une bande transporteuse.

## Patentansprüche

1. Verfahren zur Trocknung von aus Rotalgen durch alkalische Behandlung in einem wäßrigen Medium extrahierten Carrageenanen, dadurch gekennzeichnet, daß die Trocknung durch Einwirkung von Mikrowellen einer Frequenz von 100 bis 10000 MHz auf die feuchten Fasern bei normalem Druck derart durchgeführt wird, daß die Temperatur der Masse 100 °C nicht übersteigt.

2. Verfahren nach Anspruch 1, dadurch gekennzeichnet, daß die Fasern zuvor bis zu einem Trockensubstanzgehalt von 65 bis 70 % vorgetrocknet werden.

3. Verfahren nach Anspruch 1 oder 2, dadurch gekennzeichnet, daß die Frequenz der Mikrowellen 2450 MHz beträgt.

4. Verfahren nach einem der Ansprüche 1 bis 3, dadurch gekennzeichnet, daß es kontinuierlich durchgeführt wird, wobei die Carrageenane auf einem Transportband in den Mikrowellenofen eingeführt werden.

## Claims

1. Method of drying carrageenans extracted from red algae by alkaline treatment in an aqueous medium, characterized in that said drying is carried out by subjecting the moist fibers to the action of microwaves at 100 to 10,000 MHz in such a way that the temperature of the mass does not exceed 100°C at ordinary pressure.

2. Method according to claim 1, characterized in that the fibers are previously predried until the dry extract is 65% to 70°%.

3. Method according to one of claims 1 or 2, characterized in that the frequency of the microwaves is 2450 MHz.

4. Method according to any one of claims 1 to 3, characterized in that it is carried out continuously, the carrageenans being introduced into the microwave oven on a conveyor belt.
